(19) Europäisches Patentamt
European Patent Office
Office européen des brevets

(11) **EP 3 107 880 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **15711642.7**

(22) Anmeldetag: **13.02.2015**

(51) Int Cl.:
**C04B 35/472** (2006.01)     **C04B 35/491** (2006.01)
**C04B 35/493** (2006.01)     **H01G 4/30** (2006.01)
**H01G 4/12** (2006.01)

(86) Internationale Anmeldenummer:
**PCT/AT2015/050044**

(87) Internationale Veröffentlichungsnummer:
**WO 2015/120501 (20.08.2015 Gazette 2015/33)**

(54) **KERAMISCHES MATERIAL UND KONDENSATOR MIT DEMSELBEN**

CERAMIC MATERIAL AND CAPACITOR COMPRISED THEREOF

MATÉRIAU CÉRAMIQUE ET CONDENSATEUR CONTENANT CE MATÉRIAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2014 AT 501162014**

(43) Veröffentlichungstag der Anmeldung:
**28.12.2016 Patentblatt 2016/52**

(60) Teilanmeldung:
**19209998.4**

(73) Patentinhaber: **Engel, Guenter**
**8430 Leibnitz (AT)**

(72) Erfinder: **Engel, Guenter**
**8430 Leibnitz (AT)**

(74) Vertreter: **Wirnsberger, Gernot**
**Wirnsberger & Lerchbaum Patentanwälte OG**
**Mühlgasse 3**
**8700 Leoben (AT)**

(56) Entgegenhaltungen:
**WO-A1-2013/152887**

- **Chen Xue-Heng ET AL: "Study on slim-loop ferroelectric ceramics for high-power pulse capacitors", Acta Physica Sinica, Vol.57, No.11, 30. November 2008 (2008-11-30), Seiten 7298-7304, XP055183723, Gefunden im Internet: URL:http://wulixb.iphy.ac.cn/EN/article/do wnloadArticleFile.do?attachType=PDF&id=137 28 [gefunden am 2015-04-16]**
- **KANAI H ET AL: "DIELECTRIC PROPERTIES OF (PB1-XXX)(ZR0.7TI0.3)O3 (X = CA, SR, BA) CERAMICS", JOURNAL OF THE AMERICAN CERAMIC SOCIETY, BLACKWELL PUBLISHING, MALDEN, MA, US, Bd. 77, Nr. 10, 1. Oktober 1994 (1994-10-01), Seiten 2620-2624, XP000749945, ISSN: 0002-7820, DOI: 10.1111/J.1151-2916.1994.TB04652.X**
- **DIPTI ET AL: "Study on structural, dielectric, ferroelectric and piezoelectric properties of Ba doped Lead Zirconate Titanate Ceramics", PHYSICA B. CONDENSED MATTER, Bd. 431, 14. September 2013 (2013-09-14), Seiten 109-114, XP028742209, ISSN: 0921-4526, DOI: 10.1016/J.PHYSB.2013.09.011**
- **YONGJIAN YU ET AL: "Phase Stability and Ferroelectric Properties of Lead Strontium Zirconate Titanate Ceramics", JOURNAL OF THE AMERICAN CERAMIC SOCIETY, Bd. 84, Nr. 2, 20. Februar 2001 (2001-02-20), Seiten 333-40, XP55183617, ISSN: 0002-7820, DOI: 10.1111/j.1151-2916.2001.tb00659.x**

- Ki Hyun Yoon ET AL: "Dielectric and field-induced strain behaviour of (Pb 1!x Ba x ) ZrO 3 ceramics", JOURNAL OF MATE RIALS SCIENCE, 1. Januar 1997 (1997-01-01), Seiten 17-21, XP55183625, Gefunden im Internet: URL:http://rd.springer.com/content/pdf/10. 1023/A:1018654423330.pdf [gefunden am 2015-04-16]

- YONGJIAN YU ET AL: "Electrical properties and electric field-induced antiferroelectric-ferroelectric phase transition in Nd[sup 3+]-doped lead strontium zirconate titanate?ceramics", JOURNAL OF APPLIED PHYSICS, Bd. 94, Nr. 11, 1. Januar 2003 (2003-01-01), Seite 7250, XP55183618, ISSN: 0021-8979, DOI: 10.1063/1.1620678

**Beschreibung**

Die Erfindung betrifft ein antiferroelektrisches keramisches Material.

Des Weiteren betrifft die Erfindung die Verwendung eines derartigen Materials.

Schließlich umfasst die Erfindung einen Kondensator, insbesondere einen Vielschichtkondensator.

Kondensatoren werden in vielen Bereichen der Elektrotechnik eingesetzt, beispielsweise in AC/DC-Konvertern für Motorantriebe, aber auch beispielsweise zur Spannungserhöhung, Spannungserniedrigung und/oder Spannungsstabilisierung in DC/DC-Schaltungen. Bei derartigen Anwendungen sind häufig Halbleiterschalter mit Dioden (sogenannter "Inverter Circuit") und ein weiterer Kreis vorgesehen, wobei zwischen diesen Kreisen ein Kondensator angeordnet ist, der auch als Zwischenkreiskondensator bezeichnet wird. Dabei sind zur Erhöhung von Spannungs- und Strom-Kennwerten auch Serien- bzw. Parallelschaltungen von mehreren Kondensatoren möglich.

Bei den erwähnten Zwischenkreiskondensatoren hat der zwischen den anderen Kreisen angeordnete Kondensator die Aufgabe, sowohl bei schnellen als auch betragsmäßig hohen Änderungen der Betriebsgrößen Strom und Spannung die Zwischenkreisspannung konstant zu halten. Dabei tritt allgemein die Problematik auf, dass die Möglichkeiten für ein Design des Kondensators aufgrund dessen Umgebung durch die Halbleiter sowie Vorgaben durch das Substrat und erforderliche Zuleitungen limitiert sind. Problematisch in diesem Zusammenhang ist insbesondere, dass bei Kondensatoren gewünschte, ideale Kenngrößen von nicht idealen Nebeneigenschaften in Schaltkreisen mit Halbleiterelementen begleitet bzw. beeinflusst werden, welche massiv die Grenzen eines Designs bestimmen können. Diese limitierenden Nebeneigenschaften werden auch als "parasitäre" Nebeneigenschaften bezeichnet.

Für Halbleiter existieren mehrere Klassen unterschiedlicher Bauelemente, welche jeweils spezifische Vor- und Nachteile haben. Bekannt sind Halbleiterschalter auf Siliciumbasis, z. B. ein Isolated-Gate-Bipolar-Transistor (IGBT) oder ein Metal-Oxide-Semiconductor-Field-Effect-Transistor (MOSFET), und entsprechende Bauelemente mit anderem Basismaterial anstelle des Siliciums, wie insbesondere Galliumarsenid (GaAs), Galliumnitrid (GaN) oder Siliciumcarbid (SiC). Allen vorgenannten Bauelementen sind trotz spezifischer Vorteile die erwähnten parasitären Eigenschaften gemein. Diese Eigenschaften stehen zumeist komplementär zur jeweils gewünschten Funktion. Beispielsweise ergibt sich bei einem gewünscht schnellen Schalten von hohen Strömen über die bekannte Formel

$$U = -L \, dI/dt$$

ein schneller Schaltvorgang (kleines dt) eines hohen Stromes (großes dI) auch bei kleiner Induktivität L, die sich aus der Eigeninduktivität und den Leitungsinduktivitäten zusammensetzt, eine hohe (Über)-Spannung, welche zur Selbstzerstörung des Halbleiters führen kann. Dementsprechend sind geeignete Design- und Gegenmaßnahmen erforderlich, wenn eine derartige Anforderung dauerhaft zu bewältigen ist. Zur Bewältigung dieses Problems wird üblicherweise der Zwischenkreiskondensator überdimensioniert, um zum einen Überspannungen abzuschneiden und zum anderen die durch die parasitären Serienwiderstände verminderte Lade/Entladegeschwindigkeiten der Gate-Kapazitäten der Halbleiter zu kompensieren. Die Umgebung in der Applikation bestimmt somit die Auslegung des Kondensators.

Eine andere parasitäre Eigenschaft sind Leckströme, die praktisch immer zu erheblichen Temperaturerhöhungen führen, welche auf ein bestimmtes zulässiges Maß zu begrenzen sind. Zwar sind gerade Halbleiter in diesem Sinne sehr robust und bei höheren Temperaturen besonders effizient, jedoch können zu hohe Temperaturen und/oder wiederholte materialbelastende Temperaturwechsel letztlich zu einem Materialschaden jener Elemente führen oder zumindest deren Lebensdauer begrenzen, welche an den Halbleiter anschließen oder sich in dessen Nähe befinden, wie das Substrat oder Verbindungselemente sowie insbesondere auch Kondensatoren.

Kondensatoren haben bezüglich einer Temperaturbeständigkeit enge Grenzen, welche gerade bei hohen Strömen und Spannungen wirksam werden. Da bei allen Kondensatortechnologien mit zunehmender Temperatur sowohl die Leckströme steigen als auch die Durchbruchsspannungen sinken, ist dies beim Design ebenfalls zu berücksichtigen. Aufgrund der Wärmeproduktion der Halbleiter in einem Schaltkreis und wegen des eigenen Beitrags zur Temperaturerhöhung müssen die Kondensatoren neben der ohnedies bereits erforderlichen Überdimensionierung bislang auch in einigem Abstand zu den Halbleitern platziert werden, um eine effektive Kühlung und damit die Einhaltung eines vorbestimmten Temperaturbereiches zu ermöglichen. Die Beabstandung führt allerdings dazu, dass die erforderlichen längeren elektrischen Verbindungen immer mit entsprechender Induktivität behaftet sind, was im Sinne der vorstehenden Formel kontraproduktiv ist und eine zusätzliche Überdimensionierung des Kondensators bedingt.

Aus dem Stand der Technik sind verschiedene Kondensatortechnologien bekannt, insbesondere keramische Vielschichtkondensatoren, Aluminium-Elektrolytkondensatoren und metallisierte Folienkondensatoren. Als Bewertungskenngrößen für den jeweiligen Einsatzzweck werden insbesondere Kapazität, Spannung, Rippel-Strom, äquivalenter Serienwiderstand, Verlustfaktor, Frequenzverhalten, Kapazitätsstabilität, Spannungsderating, aber auch Temperaturverhalten, Zuverlässigkeit, Energiedichte und Kosten herangezogen. Unter Berücksichtigung dieser Bewertungskenngrößen bzw. Kriterien werden Aluminium-Elektrolytkondensatoren und metallisierte Folienkondensatoren vor allem im Leistungsbereich ab ca. 1 kW, keramische Kondensatoren jedoch im darunter liegenden Leistungsbereich eingesetzt.

Der allgemeine Trend zur Miniaturisierung von Bauteilen betrifft auch die Elektromobilität und damit auch Bauteile wie die vorstehend erwähnten AC/DC-Konverter für Motorantriebe. Es wird gefordert, dass elektronische Bauelemente in den entsprechenden Wechselrichtern deutlich kleiner und effizienter gestaltet sein sollen. Zu Kondensatoren wird festgehalten, dass die Eigenschaften von keramischen Vielschichtkondensatoren gegenüber Aluminium-Elektrolytkondensatoren oder metallisierten Folienkondensatoren günstig wären, wenn nicht bei den erforderlichen hohen Spannungen in Wechselrichtern die Kapazität der zu verwendenden X7R-Kondensatoren mit zunehmender Spannung absinken würde (M. März, ECPE Automotive Power Electronics Roadmap, ECPE-HOPE Symposium Automotive Power Electronics, Sindelfingen, 7. bis 8. Oktober 2008). Bei beispielsweise üblichen Spannungen von ca. 400 V sinkt demnach die Kapazität auf z. B. 25 % des Nennwertes; zudem erfolgt die Energiespeicherung ausschließlich über die elektrische Feldstärke und es kommen kaum Polarisationsanteile hinzu. Es sind aber Materialien bekannt, bei welchem die Kapazität zunächst ansteigt, einen Maximalwert erreicht und erst danach wieder absinkt (US 7,781,358; C. K. Campell et al., IEEE Transactions on Component and Packaging Technologies, Vol. 25 (2), 2002, 211). Die Energiespeicherung erfolgt auch bei den Gebrauchsspannungen mit hohem Anteil über Polarisationsenergie. Als sehr großer Vorteil erweist sich dabei eine hohe verfügbare Kapazitätsdichte bei Anwendungsbedingungen, was im Gegensatz zu konventionellen keramischen Kondensatoren steht. Als großer Nachteil wird jedoch bei diesen Materialien als Innenelektrode das sehr teure Edelmetall Palladium bzw. eine Silber/Palladium-Legierung verwendet, was für einzelne Anwendungen wie in medizinischen Geräten akzeptabel ist, aber einer breiten wirtschaftlichen Anwendung entgegensteht.

Anstelle von Palladium bzw. einer Silber/Palladium-Legierung kann seit jüngerer Zeit durch Anpassung der Zusammensetzung eines keramischen Materials in Kondensatoren auch Kupfer für Innenelektroden eingesetzt werden (WO 2013/152887 A1). Derartige Kondensatoren weisen hervorragende Hochfrequenzeigenschaften auf. Kupfer ist darüber hinaus kostengünstig. Entsprechende Vielschichtkondensatoren mit Kupfer als Innenelektrode und einer keramischen Basiskomponente auf Grundlage von Blei-Zirkonat-Titanat (PZT) finden auch bereits in der Elektronik Anwendung, wenn hohe Leistungen gefordert sind. Die Problematik der Eigenerwärmung ist aber nach wie vor gegeben.

Ausgehend vom dargestellten Stand der Technik ist es Aufgabe der Erfindung, ein keramisches Material anzugeben, das eine hohe Dielektrizitätskonstante aufweist und sich zur Herstellung von Kondensatoren mit geringer Eigenerwärmung eignet, insbesondere Vielschichtkondensatoren, die somit in unmittelbarer Nähe von Halbleitern angeordnet werden können.

Des Weiteren ist es Aufgabe der Erfindung, eine Verwendung eines derartigen Materials darzustellen.

Schließlich ist es Aufgabe der Erfindung, einen Kondensator anzugeben, der bei hoher Leistungsfähigkeit im Betrieb eine geringe Eigenerwärmung aufweist.

Die erste Aufgabe wird durch ein antiferroelektrisches keramisches Material der Formel

$$[Pb_{(1-r)}(Ba_xSr_yCa_z)_r]_{(1-1,5a-1,5b-0,5c)}(La_aNd_b)A_c(Zr_{1-d}Ti_d)O_3 \text{ wobei}$$

A ein einwertiges Ion darstellt;

$$x + y + z = 1;$$

x und/oder y und/oder z > 0;

$$0 < r \leq 0,3;$$

$$0 < d \leq 1;$$

$$0 < a \leq 0,2;$$

$$0 \leq b \leq 0,2;$$

$$0 < c \leq 0,2$$

gelöst.

Im konzeptionellen Rahmen der Erfindung ist die Überlegung gegeben, dass die Eigenerwärmung im keramischen Material bei Einsatz in einem Kondensator dadurch verringert werden kann, dass der Lade- und Entladevorgang erleichtert wird. Ausgangspunkt dieser Überlegung ist, dass in einem antiferroelektrischen Material die dielektrische Verschiebung von dem strukturellen Zustand des Kondensatormaterials abhängt und sich die makroskopische Polarisation auf die mikroskopische Ausrichtung von ionischen Einheiten und umgekehrt überträgt. In diesem Bild kann ein Lade- oder Entladevorgang als Polarisationswelle aufgefasst werden, deren Träger Gitterschwingungen des polarisierten Gitters sind. Diese Gitterschwingungen sind strukturabhängig und haben bestimmte Frequenzen und Energiedichten. Die Grundstruktur bei antiferroelektrischen Materialien gemäß dem Stand der Technik ist dabei eine Perowskit-Struktur des Typs $ABO_3$ mit an den Eckpunkten verketteten Titanat-Oktaedern, wobei die niederenergetischen Gitterschwingungen in erster Näherung eine gekoppelte Drehkippschwingung dieser Oktaeder darstellen. Je nach Zustand der Keramik bestimmen die Kippwinkel der Oktaeder den jeweiligen Phasenzustand (antiferro-, ferro- oder paraelektrisch). Die Größe der Dielektrizitätskonstante und des Verlustwinkels entsprechen der Schwingungsamplitude bzw. der Schwingungsdämpfung.

Gemäß den Überlegungen sollten genau jene kollektiven Gitterschwingungen auf struktureller Ebene erleichtert anregbar sein, was einen ersten Aspekt der theoretischen Überlegungen darstellt.

Einen zweiten Aspekt der Überlegungen stellt der gewünschte Einsatz von kostengünstigen Kupferinnenelektroden bei Vielschichtkondensatoren dar. Bei diesen ist zusätzlich das Problem zu überwinden, dass nur eine niedrige Sintertemperatur zulässig ist. Die dafür notwendigen Defektstrukturen zur Sinterunterstützung durch Sinterhilfen sind allerdings nur in engen Grenzen hinsichtlich der Zusammensetzung variierbar. Hierfür werden gemäß dem Stand der Technik einwertige Dotier-Ionen eingesetzt, welche etwa in dem Maß eingebracht werden, in welchem die für die antiferroelektrische Phase maßgeblichen Ionen valenzmäßig kompensiert werden. Im Rahmen der Erfindung wurde nun erkannt, dass eine gezielte Steuerung der Gitterdynamik die Möglichkeit eröffnet, bei Beibehaltung üblicher Sinterhilfen die Eigenerwärmung zu senken. Die Erfindung beruht auf dem Konzept, dass eine Eigenerwärmung dann am niedrigsten sein wird, wenn die Drehkippschwingungen einen energetisch flachen Verlauf um eine Ruhelage haben. Übertragen auf eine Perowskit-Struktur bedeutet dies, dass ein struktureller Phasenübergang anzunähern ist. Dies wird erfindungsgemäß durch einen partiellen Ersatz des Bleis (Pb) durch Barium (Ba) erreicht. Durch Strontium (Sr) und Calcium (Ca) können in weiterer Ausgestaltung Gitterabstände ausgeglichen werden. Da allerdings ein struktureller Phasenübergang die Ausbildung einer antiferroelektrischen Phase verhindern würde, weswegen der Phasenübergang nur anzunähern ist, sind die Gehalte an Ba, Sr und Ca so einzustellen, dass $0 < r \leq 0,3$.

Die praktische Umsetzung der vorstehenden Überlegungen zeigt, dass durch die teilweise Substitution des Pb mit Ba, Sr und/oder Ca die Struktur des antiferroelektrischen keramischen Materials so eingestellt werden kann, dass einerseits eine Eigenerwärmung bei Einsatz in einem Kondensator deutlich verringert ist und andererseits bei Anwendung in Vielschichtkondensatoren die bevorzugten Kupferinnenelektroden eingesetzt werden können. Zinn (Sn), das Ba ebenfalls ersetzen könnte, ist nicht vorgesehen, da durch Sn zwar die Eigenerwärmung gesenkt werden könnte, allerdings die ebenfalls gewünschte Sinterbarkeit bei Einsatz von Kupferinnenelektroden dann nicht gegeben ist.

Bevorzugt ist für eine günstige Beeinflussung des Gitters bzw. Ausbildung des erfindungsgemäßen Materials $0,01 \leq r \leq 0,2$.

Besonders bevorzugt ist es, dass das keramische Material mit Werten von

$$0,01 \leq x < 1;$$

$$0 \leq y \leq 0,99;$$

$$0 \leq z \leq 0,2$$

ausgebildet ist.

Wenn Ba zwingend vorgesehen ist, ergibt sich aufgrund einer optimierten Struktur eine geringe Eigenerwärmung des Materials bei Einsatz in einem Kondensator. Dies wird durch eine allfällige Präsenz von Sr und Ca zur Optimierung der Gitterabstände weiter verbessert.

Ist nur Ba vorgesehen, so ist das Material mit

$y$ und $z = 0$;

$$0,1 \leq r \leq 0,2$$

ausgebildet.

Wenn eine Ausbildung mit $0 < y \leq 0{,}99$ vorgesehen ist, wobei ein Ba-Anteil den Sr-Anteil überwiegt, kann ein Verlustwinkel eines Vielschichtkondensators und damit eine Eigenerwärmung besonders effektiv gering gehalten werden.

Für eine weitere Verbesserung kann die Präsenz sowohl von Ba als auch Sr und/oder Ca vorgesehen sein, wobei

$$0{,}01 \leq x < 1;$$

$$0 < y \leq 0{,}99;$$

$$0 < z \leq 0{,}2.$$

Dadurch kann ein Verlustwinkel und damit eine Eigenerwärmung bei Einsatz des Materials in einem Vielschichtkondensator um bis zu 80 % gesenkt werden. Hinsichtlich der Anteile von Zirconium (Zr) und Titan (Ti) beträgt die bevorzugte Maßgabe, dass $0{,}01 \leq d \leq 0{,}70$, insbesondere $0{,}03 \leq d \leq 0{,}52$.

Das einwertige Ion A ist an sich nicht kritisch, ist jedoch bevorzugt ausgewählt aus der Gruppe bestehend aus Natrium (Na), Kalium (K), Lithium (Li) und/oder Silber (Ag), wobei sich Na für eine Absenkung der Sintertemperatur und damit die Sinterbarkeit mit Kupferinnenelektroden als besonders zweckmäßig erwiesen hat. Das einwertige Ion A, insbesondere Na, kann in geringen Gehalten von 3 % bis 7 % bzw. mit $0{,}03 \leq c \leq 0{,}07$, bevorzugt $0{,}04 \leq c \leq 0{,}06$, vorliegen. Entsprechende Gehalte sind bereits ausreichend, um die Sintertemperatur auf höchstens 1050 °C abzusenken, was die Maximaltemperatur für ein Sintern bei Einsatz von Kupferinnenelektroden darstellt. Unter den einwertigen Ionen sind Na, K und Li gegenüber Ag stark bevorzugt, wobei sich vor allem Na als besonders geeignet erweist.

Als Seltenerdmetall kommt erfindungsgemäß Lanthan (La) allein oder zusammen mit Neodym (Nd) zum Einsatz. In der Perowskit-Struktur, die allgemein mit $ABO_3$ angegeben werden kann, wobei A und B für A- bzw. B-Plätze stehen, besetzen die Seltenerdmetalle A-Plätze anstelle des Pb. Da La und Nd wie die übrigen angeführten Seltenerdmetalle dreiwertig sind, handelt es sich hierbei um eine Donator-Dotierung, die durch eine Akzeptor-Dotierung mit dem einwertigen Ion A kompensiert wird. Diese Co-Dotierung wirkt sich günstig auf eine möglichst hohe Dielektrizitätskonstante aus. Besonders bevorzugt ist La, wobei ein günstiger Gehalt mit $0{,}04 \leq a \leq 0{,}18$, insbesondere $0{,}04 \leq a \leq 0{,}16$, beispielsweise $0{,}04 \leq a \leq 0{,}07$, vorgesehen sein kann. Nd kann in diesem Fall entfallen, sodass $b = 0$ ist.

Entsprechend den vorstehend dargelegten Vorteilen eines erfindungsgemäßen keramischen Materials wird dieses bevorzugt in einem Kondensator, insbesondere einem Vielschichtkondensator verwendet.

Nachfolgend ist die Erfindung anhand von Ausführungsbeispielen noch weitergehend erläutert.

Die nachfolgend beschriebenen keramischen Materialien können durch klassische Mischoxidverfahren durch Sintern von Precursoren auf beispielsweise Oxid-, Acetat-, Nitrat- und/oder Carbonatbasis im Temperaturbereich von 1000 °C bis 1150 °C erhalten werden. Alternativ können auch Sol-Gel-Verfahren angewendet werden, um zunächst aus Lösungen von Acetaten und/oder Alkoholaten der Metalle ein Sol zu bilden, das durch Trocknung und anschließende Calcinierung in die finalen keramischen Materialien überführt wird.

Die nachstehend in Tabelle 1 angeführten Beispiele sind nach dem Mischoxidverfahren hergestellt, wobei die allgemeine Formel des erstellten antiferroelektrischen Materials wie folgt lautet:

$$[Pb_{(1-r)}(Ba_xSr_yCa_z)_r]_{(0{,}65)}(La_{0{,}1}Nd_{0{,}1})Na_{0{,}1}(Zr_{0{,}6}Ti_{0{,}4})O_3$$

Ba, Sr und/oder Ca sind in verschiedenen Anteilen Bestandteil der zu sinternden Ausgangsmaterialien und werden so in das finale Material eingebracht.

Tabelle 1: Ausführungsbeispiele

| Beispiel | r | x (Ba) | y (Sr) | z (Ca) | Reduktion Verlustwinkel [%] |
|---|---|---|---|---|---|
| 1 | 0,2 | 1,0 | 0,0 | 0,0 | 70 |
| 2 | 0,15 | 0,66 | 0,34 | 0,0 | 80 |
| 3 | 0,15 | 0,66 | 0,27 | 0,07 | 80 |

Wie sich aus Tabelle 1 ergibt, können durch die Beimengung von Ba, Sr und/oder Ca die Verlustwinkel um 70 % bis 80 % gesenkt werden, was eine entsprechende Reduktion der Eigenerwärmung des Materials bei Einsatz in einem Vielschichtkondensator zur Folge hat.

Ähnliche Ergebnisse können auch erhalten werden, wenn die Gehalte von Zr und Ti variiert werden und die allgemeine Formel für das keramische Material mit Ba-, Sr-und/oder Ca-Substitution z. B. wie folgt lautet:

$$[Pb_{(1-r)}(Ba_xSr_yCa_z)_r]_{(0.65)}(La_{0.1}Nd_{0.1})Na_{0.1}(Zr_{0.9}Ti_{0.1})O_3$$

Vielschichtkondensatoren mit einem erfindungsgemäßen keramischen Material und dazwischen liegenden Kupferinnenelektroden eignen sich daher in besonderer Weise zum Einsatz in platzsparenden Schaltungen, da die Eigenerwärmung weitgehend zurückgedrängt ist. Hierdurch ist es beispielsweise möglich, den Vielschichtkondensator zwischen mehreren Halbleiterdioden zu platzieren und damit eine platzoptimierte Struktur bei kleinstmöglichen Verlusten und minimierter elektromagnetischer Abstrahlung zu schaffen.

**Patentansprüche**

1.   Antiferroelektrisches keramisches Material der Formel

$$[Pb_{(1-r)}(Ba_xSr_yCa_z)_r]_{(1-1,5a-1,5b-0,5c)}(La_aNd_b)A_c(Zr_{1-d}Ti_d)O_3$$

wobei
A ein einwertiges Ion darstellt;

$$x + y + z = 1;$$

x und/oder y und/oder z > 0;

$$0 < r \leq 0,3;$$

$$0 < d \leq 1;$$

$$0 < a \leq 0,2;$$

$$0 \leq b \leq 0,2;$$

$$0 < c \leq 0,2.$$

2.   Keramisches Material nach Anspruch 1, wobei

$$0,01 \leq r \leq 0,2.$$

3.   Keramisches Material nach Anspruch 1 oder 2, wobei

$$0,01 \leq x < 1;$$

$$0 \leq y \leq 0,99;$$

$$0 \leq z \leq 0,2.$$

4. Keramisches Material nach Anspruch 3, wobei y und z = 0;

$$0,1 \leq r \leq 0,2.$$

5. Keramisches Material nach Anspruch 3, wobei

$$0 < y \leq 0,99;$$

ein Ba-Anteil den Sr-Anteil überwiegt.

6. Keramisches Material nach Anspruch 3, wobei

$$0,01 \leq x < 1;$$

$$0 < y \leq 0,99;$$

$$0 < z \leq 0,2;$$

ein Ba-Anteil den Sr-Anteil und ein Sr-Anteil den Ca-Anteil überwiegt.

7. Keramisches Material nach einem der Ansprüche 1 bis 6, wobei $0,01 \leq d \leq 0,70$, insbesondere $0,03 \leq d \leq 0,52$.

8. Keramisches Material nach einem der Ansprüche 1 bis 7, wobei A ausgewählt ist aus der Gruppe bestehend aus Na, K, Li und/oder Ag.

9. Verwendung eines keramischen Materials gemäß einem der Ansprüche 1 bis 8 für einen Kondensator, insbesondere einen Vielschichtkondensator.

10. Kondensator mit einem keramischen Material gemäß einem der Ansprüche 1 bis 8.

11. Vielschichtkondensator mit zumindest einer Schicht aus einem Material gemäß einem der Ansprüche 1 bis 8.

12. Vielschichtkondensator nach Anspruch 9, wobei Innenelektroden aus Kupfer ausgebildet sind.

13. Wechselrichter für einen Motorantrieb umfassend einen Vielschichtkondensator nach Anspruch 11 oder 12.


**Claims**

1. An antiferroelectric ceramic material with formula

$$[Pb_{(1-r)} (Ba_x Sr_y Ca_z)_r]_{(1-1.5a-1.5b-0.5c)} (La_a Nd_b)A_c (Zr_{1-d}Ti_d)O_3$$

wherein
A represents a monovalent ion;

$$x + y + z = 1;$$

x and/or y and/or z > 0;

$$0 < r \leq 0.3;$$

$$0 < d \leq 1;$$

$$0 < a \leq 0.2;$$

$$0 \leq b \leq 0.2;$$

$$0 < c \leq 0.2.$$

2. The ceramic material as claimed in claim 1, wherein

$$0.01 \leq r \leq 0.2.$$

3. The ceramic material as claimed in claim 1 or claim 2, wherein

$$0.01 \leq x < 1;$$

$$0 \leq y \leq 0.99;$$

$$0 \leq z \leq 0.2.$$

4. The ceramic material as claimed in claim 3, wherein y and z = 0;

$$0.1 \leq r \leq 0.2.$$

5. The ceramic material as claimed in claim 3, wherein

$$0 < y \leq 0.99;$$

a Ba content is greater than the Sr content.

6. The ceramic material as claimed in claim 3, wherein

$$0.01 \leq x < 1;$$

$$0 \leq y \leq 0.99;$$

$$0 \leq z \leq 0.2;$$

a Ba content is greater than the Sr content and a Sr content is greater than the Ca content.

7. The ceramic material as claimed in one of claims 1 to 6, wherein $0.01 \leq d \leq 0.70$, in particular $0.03 \leq d \leq 0.52$.

8. The ceramic material as claimed in one of claims 1 to 7, wherein A is selected from the group consisting of Na, K, Li and/or Ag.

**9.** Use of a ceramic material as claimed in one of claims 1 to 8, as a capacitor, in particular a multilayer capacitor.

**10.** A capacitor containing a ceramic material as claimed in one of claims 1 to 8.

**11.** A multilayer capacitor having at least one layer produced from a material as claimed in one of claims 1 to 8.

**12.** The multilayer capacitor as claimed in claim 9, wherein the inner electrodes are produced from copper.

**13.** An inverter for a motor drive comprising a multilayer capacitor as claimed in claim 11 or claim 12.


**Revendications**

**1.** Matériau céramique antiferroélectrique correspondant à la formule

$$[Pb_{(1-r)}(Ba_xSr_yCa_z)_r]_{(1-1,5a-1,5b-0,5c)} (La_aNd_b)A_c(Zr_{1-d}Ti_d)O_3$$

dans lequel
A étant un ion monovalent ;

$$x + y + z = 1 ;$$

x et/ou y et/ou z > 0 ;

$$0 < r \leq 0,3 ;$$

$$0 < d \leq 1 ;$$

$$0 < a \leq 0,2 ;$$

$$0 \leq b \leq 0,2 ;$$

$$0 < c \leq 0,2.$$

**2.** Matériau céramique selon la revendication 1, dans lequel

$$0,01 \leq r \leq 0,2.$$

**3.** Matériau céramique selon les revendications 1 ou 2, dans lequel

$$0,01 \leq x < 1 ;$$

$$0 \leq y \leq 0,99 ;$$

$$0 \leq z \leq 0,2.$$

**4.** Matériau céramique selon la revendication 3, dans lequel

$$y \text{ et } z = 0 \;;$$

$$0{,}1 \leq r \leq 0{,}2.$$

5. Matériau céramique selon la revendication 3, dans lequel

$$0 < y \leq 0{,}99 \;;$$

une portion de Ba est supérieure à la proportion de Sr.

6. Matériau céramique selon la revendication 3, dans lequel

$$0{,}01 \leq x < 1 \;;$$

$$0 < y \leq 0{,}99 \;;$$

$$0 < z \leq 0{,}2 \;;$$

une portion de Ba est supérieure à la proportion de Sr, et une portion de Sr est supérieure à la proportion de Ca.

7. Matériau céramique selon l'une des revendications 1 à 6, dans lequel
$0{,}01 \leq d \leq 0{,}70$, notamment $0{,}03 \leq d \leq 0{,}52$.

8. Matériau céramique selon l'une des revendications 1 à 7, dans lequel A est choisi dans le groupe constitué de Na, K, Li et/ou Ag.

9. Utilisation d'un matériau céramique selon l'une des revendications 1 à 8 pour un condensateur, s'agissant notamment d'un condensateur multi-couche.

10. Condensateur comportant un matériau céramique selon l'une des revendications 1 à 8.

11. Condensateur multi-couche comportant au moins une couche en un matériau selon l'une des revendications 1 à 8.

12. Condensateur multi-couche selon la revendication 9, dans lequel les électrodes intérieures sont réalisées en cuivre.

13. Onduleur pour un dispositif d'entraînement à moteur, comprenant un condensateur multi-couche selon les revendications 11 ou 12.

**IN DER BESCHREIBUNG AUFGEFÜHRTE DOKUMENTE**

**In der Beschreibung aufgeführte Patentdokumente**

- US 7781358 B

- WO 2013152887 A1

**In der Beschreibung aufgeführte Nicht-Patentliteratur**

- **M. MÄRZ.** ECPE Automotive Power Electronics Roadmap. *ECPE-HOPE Symposium Automotive Power Electronics,* Oktober 2008

- **C. K. CAMPELL et al.** *IEEE Transactions on Component and Packaging Technologies,* 2002, vol. 25 (2), 211